# EUROPÄISCHE PATENTANMELDUNG

(11) **EP 1 749 630 A1**
(43) Veröffentlichungstag der Anmeldung: **07.02.2007**
(21) Anmeldenummer: 06111176.1
(22) Anmeldetag: 15.03.2006
(51) Int. Cl.: B28D 1/04, B28D 1/12

(54) **Schneid- oder Trennwerkzeug**

(30) Priorität: 05.08.2005 DE 202005012311 U
(71) Anmelder: DEUDIAM Diamantwerkzeuge und Maschinen GmbH, 33161 Hövelhof (DE)
(72) Erfinder: LIEMKE, Gerhard, 33161, Hövelhof (DE)
(74) Vertreter: Dantz, Jan Henning

(57) **Zusammenfassung**

Ein Schneid- oder Trennwerkzeug umfasst mindestens einen Schneidzahn (2), der mit einem Grundelement (1) stoffschlüssig verbunden ist, wobei der Schneidzahn (2) eine Schicht (4) aus Carbid oder einer Mischung aus Carbid und Polykristallinen Diamanten aufweist. Ferner ist die Carbid- oder Mischungsschicht (4) mit einem Trägerelement (3) aus einem schweißfähigen Material unlösbar verbunden, das mit dem Grundelement (1) verschweißt ist. Ein in diesem Sinne ausgebildetes Schneid- oder Trennwerkzeug besitzt eine sehr hohe Belastbarkeit auf.

## Beschreibung

Die vorliegende Erfindung betrifft ein Schneid- oder Trennwerkzeug gemäß dem Oberbegriff des Anspruchs 1.

Derartige Schneid- oder Trennwerkzeuge kommen in unterschiedlichen Bereichen zum Einsatz. Beispielhaft sei hier das Trennen und/oder Schneiden von Stein oder Beton genannt, wobei die eingesetzten Schneid- oder Trennwerkzeuge als Trennscheiben, Bohrkronen, insbesondere Kembohrkronen, oder dergleichen ausgebildet sind.

Die Schneidzähne, mit denen die Schneid- oder Trennwerkzeuge bestückt sind, weisen eine Schicht aus Carbid, vorzugsweise Metall-Carbid oder eine Mischung aus Carbid und Diamanten auf, sogenannten polykristallinen Diamanten (PKD).

Dabei sind die Schneidzähne stoffschlüssig, üblicherweise durch Löten, vorzugsweise Hartlöten mit einem aus Stahl bestehenden Grundelement verbunden, das als Träger für die Schneidzähne dient und scheibenförmig oder topfartig beim Einsatz als Bohrkrone ausgebildet ist.

Allerdings ist die bislang ausschließlich mögliche Verbindung der Schneidzähne mit dem Grundelement durch Löten mit erheblichen Nachteilen verbunden, insbesondere hinsichtlich der Standzeit des Schneid- oder Trennwerkzeuges.

Aufgrund der relativ hohen Betriebstemperaturen, die beim Schneiden oder Trennen entstehen, in Verbindung mit der hohen Lastspielzahl, die durch die auftretende schwingende Beanspruchung im Betrieb auftritt, stellen die Lötverbindungen keine Verbindungen dar, die den Forderungen an eine optimale Standzeit des Schneid- oder Trennwerkzeuges gerecht werden.

So kommt es zu einem relativ häufigen Ausbrechen der Schneidzähne durch die genannten Belastungen, die dazu führen, dass das Schneid- oder Trennwerkzeug unbrauchbar wird. Vielfach ist eine Reparatur, also der Einsatz neuer Schneidzähne gar nicht möglich, und wenn, dann nur mit einem erheblichen Arbeitsaufwand. In jedem Fall führt die insoweit eingeschränkte Standzeit zu Kosten, die einem betriebswirtschaftlich sinnvollen Einsatz entgegenstehen.

Gerade unter Berücksichtigung dessen, dass solche Schneid- und Trennwerkzeuge einem großen Umfang zum Einsatz kommen, kommt dem geschilderten Umstand eine besondere Bedeutung zu.

Der vorliegenden Erfindung liegt daher die Aufgabe zugrunde, ein Schneid- oder Trennwerkzeug der gattungsgemäßen Art so weiter zu entwickeln, dass es einfach und kostengünstig herstellbar ist und seine Standzeit wesentlich erhöht wird.

Diese Aufgabe wird durch ein Schneid- oder Trennwerkzeug mit den Merkmalen des Anspruchs 1 gelöst.

Ein in diesem Sinne ausgebildetes Schneid- oder Trennwerkzeug zeichnet sich insbesondere durch seine wesentlich höhere Belastbarkeit hinsichtlich der Verbindungen zwischen den Schneidzähnen und dem Grundelement aus.

Durch die Verschweißung der Schneidzähne mit dem Grundelement können nun die Schneid- und Trennwerkzeuge über einen signifikant längeren Zeitraum eingesetzt werden als dies bei solchen nach dem Stand der Technik der Fall ist, ohne dass es zu Beeinträchtigungen der Verbindungsstellen Schneidzähne/Grundelement kommt.

Neben der kostenminimierenden Erhöhung der Standzeit ist als bemerkenswerter Vorteil weiter hervorzuheben, dass ein neues Schneid- oder Trennwerkzeug sehr einfach und mit geringem fertigungstechnischen Aufwand herstellbar ist, wobei vorzugsweise die Verschweißung jedes Schneidzahnes mit dem Grundelement durch Laser-Schweißung erfolgt, die im wesentlichen in einem automatischen Arbeitsablauf durchgeführt werden kann.

Das aus einem schweißfähigen Material, vorzugsweise Stahl bestehende Trägerelement ist mit der Schicht aus Carbid oder einer Mischung aus Carbid und polykristallinen Diamanten derart innig miteinander verbunden, dass ein Lösen dieser Verbindung selbst bei extremen Betriebsbedingungen hinsichtlich Druck und Temperatur ausgeschlossen ist. Dies trifft gleichermaßen auf die Verschweißung des Trägerelementes mit dem Grundelement zu, das ebenfalls üblicherweise aus Stahl besteht.

Die Herstellung des Schneidzahnes, das heißt, die Verbindung der genannten Schichten mit dem Trägerelement erfolgt im Sinne einer Sinterung durch hohen Druck und hohe Temperatur.

Das eigentliche Schneidelement kann, wie erwähnt, aus Metall-Carbiden bestehen, wie Chrom, Wolfram, Molybdän, Vanadium oder dergleichen. Diese Schneidschicht ist dann unmittelbar mit dem Trägerelement verbunden.

Stattdessen besteht auch die Möglichkeit als Schneidschicht ausschließlich Polykristalline Diamanten (PKD) einzusetzen, die mit einer Carbid-Schicht verbunden ist, die wiederum von dem Trägerelement getragen wird.

Um eine gewisse Zähigkeit der Schneidschicht zu erreichen, kann diese aus einer Mischung von Polykristallinen Diamanten und Carbiden bestehen, die dann entweder unmittelbar oder über eine Zwischenschicht aus Carbid mit dem Trägerelement verbunden ist.

Die Mischungsverhältnisse zwischen den Carbiden und den Polykristallinen Diamanten sind von den jeweiligen Ansprüchen an die Schneidelemente abhängig.

Das Trägerelement, das, wie erwähnt, vorzugsweise aus Stahl besteht, kann selbstverständlich auch aus einem anderen schweißbaren Material gebildet sein, einschließlich diverser Stahllegierungen, deren Auswahl ebenfalls abhängig ist von den je nach Einsatzgebiet unterschiedlichen Beanspruchungen.

Neben dem genannten Laser-Schweißen sind selbstverständlich auch andere Schweißverfahren denkbar, mit denen die Schneidzähne am Grundelement befestigt werden, wobei die Eignung vorrangig von der möglichen rationellen Fertigung bestimmt wird.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

### Es zeigen:

- Figur 1: ein erfindungsgemäßes Schneid- oder Trennwerkzeug in einer perspektivischen Ansicht
- Figur 2: das Schneid- oder Trennwerkzeug in einer Draufsicht
- Figur 3: einen Teilausschnitt des Schneid- oder Trennwerkzeuges in einer Seitenansicht

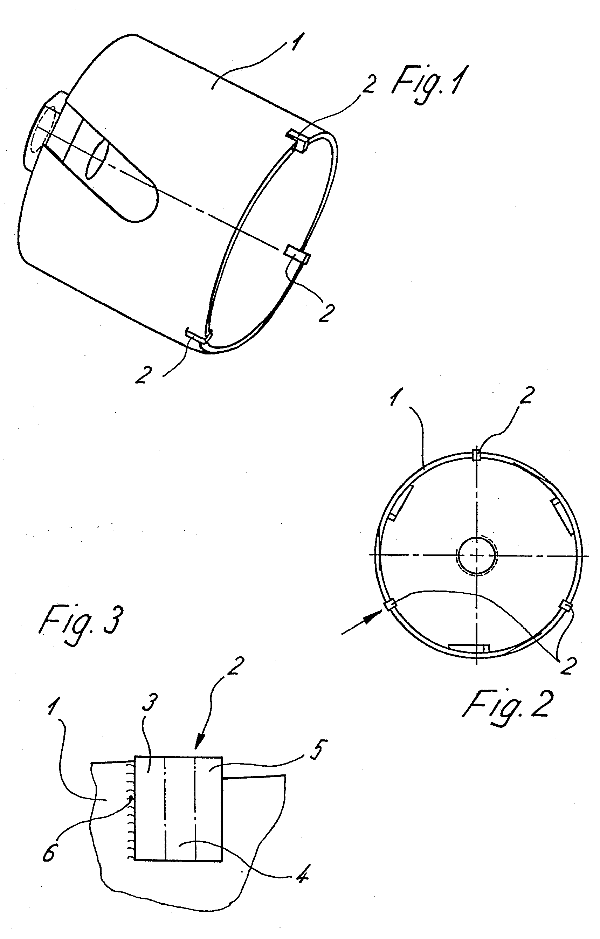

In den Figuren 1 und 2 ist ein Schneid- oder Trennwerkzeug in Form einer Bohrkrone dargestellt, die in eine nicht gezeigte Bohrmaschine einspannbar ist und die ein topfförmiges Grundelement 1 aus einem schweißfähigen Material, vorzugsweise Stahl, aufweist.

An seiner offenen Stirnseite weist das Grundelement 1 mehrere im vorliegenden Ausführungsbeispiel drei Schneidzähne 2 auf, die in gleichem Winkelabstand zueinander stehen und die in die Stirnkante des Grundelementes 1 eingelassen und mit diesen fest verbunden sind, wobei eine Schneidkante einer Schneidschicht 5 zum Schneiden bzw. Trennen frei liegt.

Jeder Schneidzahn 2 weist erfindungsgemäß ein Trägerelement 3 aus einem schweißfähigen Material, vorzugsweise Stahl auf, mit dem eine Metall-Carbidschicht 4 unlösbar verbunden ist, das wiederum die aus Polykristallinen Diamanten bestehende Schneidschicht 5 trägt, die ebenfalls unlösbar mit der Metall-Carbidschicht 4 verbunden ist.

Im Bereich seiner Anlagefläche am Grundelement 1 ist das Trägerelement 3 mit dem Grundelement 1 verschweißt. Die Schweißnaht ist in der Figur 3 mit dem Bezugszeichen 6 versehen.

Dabei kann das Trägerelement 3 im Bereich seiner gesamten Anlagefläche mit dem Grundelement 1 verschweißt sein, das heißt, sowohl im Bereich der dargestellten Schweißnaht 6 wie auch im Anlagebereich am Grund einer Ausnehmung des Grundelementes 1, in der der plattenförmige Schneidzahn 2 einliegt.

## Patentansprüche

1. Schneid- oder Trennwerkzeug, mit mindestens einem Schneidzahn (2), der mit einem Grundelement (1) stoffschlüssig verbunden ist, wobei der Schneidzahn (2) eine Schicht (4) aus Carbid oder einer Mischung aus Carbid und Polykristallinen Diamanten aufweist, **dadurch gekennzeichnet, dass** die Carbid- oder Mischungsschicht (4) mit einem Trägerelement (3) aus einem schweißfähigen Material unlösbar verbunden ist, das mit dem Grundelement (1) verschweißt ist.

2. Schneid- oder Trennwerkzeug nach Anspruch 1, **dadurch gekennzeichnet, dass** das schweißfähige Material des Trägerelementes (3) aus Stahl oder Stahllegierungen gebildet ist.

3. Schneid- oder Trennwerkzeug nach Anspruch 1 oder 2, **dadurch gekennzeichnet, dass** das Trägerelement (2) in einem Teilbereich der Anlage am Grundelement (1) mit diesem verschweißt ist.

4. Schneid- oder Trennwerkzeug nach einem der vorhergehenden Ansprüche, **dadurch gekennzeichnet, dass** das Trägerelement (3) im gesamten Anlagebereich mit dem Grundkörperelement (1) verschweißt ist.

5. Schneid- oder Trennwerkzeug nach einem der vorhergehenden Ansprüche, **dadurch gekennzeichnet, dass** das Trägerelement (3) durch Laser-Schweißen mit dem Grundelement (1) verbunden ist.

6. Schneid- oder Trennwerkzeug nach einem der vorhergehenden Ansprüche, **dadurch gekennzeichnet, dass** die Carbid- oder Mischungsschicht (4) im Sinne eines Sinterns mit dem Trägerelement (3) verbunden ist.

7. Schneid- oder Trennwerkzeug nach einem der vorhergehenden Ansprüche, **dadurch gekennzeichnet, dass** auf der dem Trägerelement (3) abgewandten Seite mit der Carbidschicht (4) eine Schneidschicht (5) aus Polykristallinen Diamanten oder einer Mischung aus Polykristallinen Diamanten und Metall-Carbiden unlösbar verbunden ist.
